# EUROPÄISCHE PATENTSCHRIFT

(11) **EP 1 210 025 B1**
(45) Veröffentlichungstag und Bekanntmachung des Hinweises auf die Patenterteilung: **28.07.2004**
(21) Anmeldenummer: 00964134.1
(22) Anmeldetag: 07.09.2000
(51) Int. Cl.: A61C 5/06, A61C 17/20

(54) **HANDGERÄT ZUM EINFÜLLEN EINER ZAHNFÜLLMASSE AUF KUNSTHARZBASIS IN EINE KAVITÄT EINES ZAHNES**
INSTRUMENT FOR INTRODUCING A DENTAL FILLING MATERIAL WITH A SYNTHETIC-RESIN BASE INTO A TOOTH CAVITY
INSTRUMENT POUR INTRODUIRE UN PRODUIT DENTAIRE POUR OBTURATION A BASE DE RESINE SYNTHETIQUE DANS LA CAVITE D'UNE DENT

(30) Priorität: 09.09.1999 DE 19943217; 15.01.2000 DE 10001513
(43) Veröffentlichungstag der Anmeldung: 05.06.2002
(73) Patentinhaber: Tilse, Rainer, 75172 Pforzheim (DE)
(72) Erfinder: Tilse, Rainer, 75172 Pforzheim (DE)
(74) Vertreter: Twelmeier, Ulrich, Dipl.Phys.
(86) Internationale Anmeldenummer: PCT/EP2000/008723
(87) Internationale Veröffentlichungsnummer: WO 2001/017454

(56) Entgegenhaltungen:
- EP-A- 0 970 717
- FR-A- 2 190 176
- US-A- 4 768 955

## Beschreibung

Die Erfindung geht aus von einem Handgerät mit den im Oberbegriff des Anspruchs 1 angegebenen Merkmalen.

Seit Zahnfüllungen aus Amalgam wegen Befürchtungen, das in ihnen enthaltene Quecksilber könne gesundheitliche Schäden herbeiführen, ins Gerede gekommen sind, werden mehr und mehr Zahnfüllungen aus Kunststoff verwendet. Zu ihrer Herstellung werden Füllmassen auf Kunstharzbasis verwendet. Es ist bekannt, als Kunstharzbasis dafür ein mit ultraviolettem Licht härtbares Kunstharz zu verwenden und in das Kunstharz ein anorganisches Pulver oder eine Mischung von verschiedenen anorganischen Pulvern als Füllstoff einzulagern. Je höher der Gehalt der Füllmasse an Füllstoff ist, desto größer ist die Zähigkeit der Masse und desto geringer ist die beim Aushärten auftretende Schrumpfung. Zähpastöse Füllmassen lassen sich aber beim Herstellen von direkten Zahnfüllungen nur schwierig lückenlos in die zu füllende Kavität des Zahnes hineinbringen, insbesondere wenn die Kavität eng und lang ist. Der Zahnarzt weiß in diesen Fällen nicht mit Sicherheit, ob die Füllmasse den Grund der Kavität erreicht hat und die Kavität lückenlos füllt. Stellt man direkte Füllungen mit Füllmassen her, welche weniger Füllstoff enthalten und deshalb dünnflüssiger sind dann, kann man damit zwar auch enge und tiefe Kavitäten direkt füllen, allerdings zeigen solche Füllmassen, welche geringere Mengen an Füllstoffen enthalten, beim Erhärten eine stärkere Schrumpfung, was zu Spalten zwischen der Füllung und dem Zahn und zu Rissen in der Füllung führen kann; das wird Schäden am Zahn zur Folge haben. Dünnflüssige Füllmassen haben den weiteren Nachteil, daß sie sich, solange sie nicht ausgehärtet sind, nur schwierig in der zu füllenden Kavität zurückhalten lassen; es besteht die Gefahr, daß die Füllmasse teilweise aus der Kavität wieder herausfließt, sich an unerwünschten Stellen der Zahnkrone festsetzt und / oder in Taschen zwischen Zahnhals und Zahnfleisch eindringt. Wegen der stärkeren Schrumpfung der dünnflüssigen Füllmassen ist es femer schwierig, eine Füllung mit einer Oberfläche zu erzielen, welche exakt mit der Oberfläche der Zahnkrone in der Umgebung der Kavität abschließt. Füllmassen mit höherem Anteil anorganischer Füllstoffe haben zwar den Vorteil, weniger zu schrumpfen und sind auch abriebfester, sind jedoch schwerer in eine Kavität einzufüllen.

Für das Einfüllen einer Füllmasse in die Kavität eines Zahnes gibt es Handgeräte in Gestalt von Pistolen oder Spritzen, in welche ein kleiner Vorratsbehälter in Form einer Patrone eingelegt wird. Durch Druck auf einen Hebel wird die Füllmasse durch eine Düse in Gestalt eines Röhrchens ausgepreßt. Das Röhrchen führt man in die Kavität ein oder setzt es auf deren Rand auf, um die Kavität zu füllen.

Es ist bekannt, mittels einer Füllmasse aus Kunstharz auch indirekte Füllungen herzustellen. Bei der indirekten Füllung wird ein aus Kunststoff oder Keramik bestehendes, von einem Zahntechniker vorgefertigtes Einlegeteil (Inlay) mittels der Füllmasse auf Kunstharzbasis in die Kavität in der Kaufläche eines Backenzahnes (Molaren) geklebt. Wird dazu eine gut fließende Füllmasse verwendet, tritt das Problem auf, daß beim Einpressen des Inlays überflüssige Füllmasse seitlich herausgequetscht wird und an der Zahnkrone herab bis in Zahnfleischtaschen laufen kann. Außerdem tritt beim Aushärten eine Schrumpfung auf, die zu der bereits beschriebenen nachteiligen Bildung von Spalten und Rissen führen kann. Wird zum Herstellen einer indirekten Füllung mit einer Füllmasse gearbeitet, welche zäher ist, weil sie einen höheren Anteil an Füllstoffen hat, dann besteht zwar nicht mehr die Gefahr, daß der Füllstoff an der Zahnkrone herabläuft doch verteilt sich die zäh - pastöse Füllmasse nur unwillig in der Kavität zwischen dem Zahn und dem Inlay, wenn dieses eingepreßt wird. Einen Fortschritt hat eine Technik gebracht, bei welcher der Zahnarzt mit einem Handstück, welches er normalerweise zur Reinigung der Zähne mittels Ultraschall verwendet, von außen auf das Inlay einwirkt. Das Handstück trägt an seiner Spitze ein abnehmbares Reinigungswerkzeug. Dieses nimmt der Zahnarzt ab und setzt stattdessen ein spezielles Endstück an, auf welches die Ultraschallschwingungen übertragen werden. Mit dem Endstück drückt er auf das Inlay. Durch die Ultraschalleinwirkung wird die Viskosität der Füllmasse herabgesetzt, so daß sie sich in der Kavität leichter unter dem Inlay verteilt. Die Ultraschalleinwirkung muß in mehreren Schritten mit dazwischen liegenden Pausen durchgeführt werden, damit die Füllmasse durch Ultraschallerwärmung nicht vorzeitig aushärtet. Diese Vorgehensweise ist auf das Herstellen von indirekten Füllungen beschränkt weil das Inlay benötigt wird, um die Ultraschallschwingungen auf die bereits in die Kavität eingefüllte Zähnfüllmasse übertragen zu können.

Aus der FR 2 190 176 ist es zum Füllen eines Wurzelkanals ferner bekannt, ein Handstück mit einem Ultraschallerzeuger an einen zu behandelnden Zahn anzusetzen und mit einer separaten Einfüllspritze Füllmasse in den Wurzelkanal einzufüllen.

Der vorliegenden Erfindung liegt die **Aufgabe** zugrunde, das Herstellen von direkten Zahnfüllungen mit Füllmassen auf Kunstharzbasis zu vereinfachen und die eingangs genannten Nachteile, insbesondere eine unzureichende Füllung, eine Rißbildung und ein Herauslaufen von Füllmasse aus der Kavität zu verringern oder ganz zu vermeiden.

Diese Aufgabe wird gelöst durch ein Handgerät mit den im Anspruch 1 angegebenen Merkmalen. Vorteilhafte Weiterbildungen der Erfindung sind Gegenstand der abhängigen Ansprüche.

Mit dem erfindungsgemäßen Handgerät kann auf die Füllmasse nicht erst nach dem Einfüllen der Füllmasse in eine Kavität, sondern bereits während des Einfüllens der Füllmasse in die Kavität mit Schall, dessen Frequenz so hoch ist, daß er die Viskosität der Füllmasse herabsetzt, insbesondere mit Ultraschall, eingewirkt werden. Das war bisher nicht möglich, weil es dafür kein geeignetes Werkzeug gab.

Die Erfindung hat große Vorteile:
◆ Es kann zum Herstellen von direkten Füllungen mit zäh - pastösen Zahnfüllmassen gearbeitet werden, welche einen hohen Anteil anorganischer Füllstoffe enthalten. Die zunächst zäh - pastöse Füllmasse wird während des Füllvorganges unter der Einwirkung von Schall, insbesondere von Ultraschall trotz des hohen Anteils an Füllstoffen besser fließfähig.
◆ Für die normalerweise zäh - pastöse Füllmasse kann auf diese Weise eine enge Düse, insbesondere in Form eines kurzen, engen Röhrchens, verwendet werden, wie es sonst nur für bereits unter normalen Umständen dünnflüssige Füllmassen verwendet werden kann.
◆ Mit einer engen Düse, insbesondere in Form eines engen Röhrchens, kann die Füllmasse problemlos bis auf den Grund der zu füllenden Kavität gebracht und diese lückenlos gefüllt werden.
◆ Da die Füllmasse im Durchfluß durch die Düse mit Schall, insbesondere mit Ultraschall beaufschlagt wird, kommt es auch bei ununterbrochener Schalleinwirkung nicht zu einer zu starken Erwärmung der Füllmasse, so daß die Kavität ohne Unterbrechungen gefüllt werden kann.
◆ Sobald die Füllmasse die Düse verlassen hat, nimmt die Schalleinwirkung auf sie rapide ab und die Füllmasse kehrt wieder in ihren zäh - pastösen Zustand zurück. Selbst bei nach unten offenen Kavitäten besteht deshalb nicht mehr die Gefahr, daß die Füllmasse aus der Kavität wieder herausläuft.
◆ Die Erfindung bringt dem Zahnarzt eine erhebliche Arbeitserleichterung und Beschleunigung seiner Arbeit.
◆ Es ist eine direkte Füllung der Kavität leicht möglich, welche bündig mit der die Kavität umgebenden Zahnoberfläche abschließt.
◆ Wegen des hohen Anteils der Füllmasse an anorganischen Füllstoffen, insbesondere Quarzmehl, treten beim Härten keine Spalte und Risse auf; die Füllung ist verschleißfest und kann die Kavität dauerhaft verschließen.
◆ Die Erfindung eignet sich vor allem für direkte Füllungen, aber auch für indirekte Füllungen, bei denen die Bemessung der richtigen Menge an Füllmasse jetzt leichter möglich ist und ein Überquellen der Füllmasse beim Einpressen des Inlays weitgehend vermieden wird.

Zum Einfüllen einer Zahnfüllmasse auf Kunstharzbasis in eine Kavität eines Zahnes hat das Handgerät, welches die zunächst zäh - pastöse Zahnfüllmasse aus einem Vorratsbehälter entnimmt, eine Düse, aus welcher die Füllmasse austritt. Das Handgerät enthält eine Schallquelle, insbesondere Ultraschallquelle, welche die Düse in Schwingungen versetzt, welche auf die Füllmasse übertragen werden, während diese durch die Düse hindurchfließt. Außerdem hat das Handgerät einen Griffteil, damit es für den Zahnarzt handhabbar ist, und Mittel, welche die Füllmasse aus dem Vorratsbehälter zur Düse fördern. Bei diesen Mitteln kann es sich um eine kleine Kolbenpumpe handeln, welche die Zahnfüllmasse aus dem Vorratsbehälter herausschiebt. Es ist aber auch möglich, die Füllmasse durch Handbetätigung aus dem Vorratsbehälter herauszudrücken. Ist der Vorratsbehälter eine kleine Patrone oder eine kleine Kartusche, dann kann man die Füllmasse daraus mit einem Kolben herausdrücken, welcher von Hand mittels eines Hebels oder mittels eines Druckknopfes betätigt wird. Ist der Vorratsbehälter eine Tube oder ein flexibler Schlauch, dann kann im Handgerät eine Quetschvorrichtung vorgesehen sein, welche durch Handbetätigung die Füllmasse herausdrückt. Das Handgerät kann nach Art einer Spritzpistole ausgebildet sein und einen Hebel haben, der wie ein Abzugshebei bei einer Pistole mit dem Zeigefinger betätigt werden kann und ein feines Dosieren der Füllmasse ermöglicht. Das Handgerät kann aber auch nach Art eines zahnärztlichen Handstückes ausgebildet sein und beispielsweise einen seitlichen Hebel oder einen Druckknopf haben, wie er bei Handstücken bekannt ist, die der Druckluftzufuhr und der Spritzwasserzufuhr dienen und deren Handhabung den Zahnarzt gut bekannt ist, so daß er dieselbe Handhabungstechnik leicht auch für das dosierte Einfüllen einer Füllmasse einsetzen kann.

Vorzugsweise ist der Hebel oder Druckknopf, mit welchem das Fördern der Füllmasse betätigt wird, zugleich das Betätigungsteil für die Ultraschallquelle, so daß durch die Betätigung eines gemeinsamen Betätigungsteils sowohl die Ultraschallquelle eingeschaltet als auch der Fördervorgang bewerkstelligt wird. Wird das Betätigungsteil losgelassen, hört der Fördervorgang auf und wird die Ultraschallquelle wird abgeschaltet. Auf diese Weise ist eine äußerst bequeme Handhabung für den Zahnarzt gewährleistet.

Als Ultraschallquelle eignet sich besonders ein Piezo - Schwinger, weil er in besonders kleinen Baugrößen erhältlich ist. Möglich ist auch die Verwendung eines magnetostriktiven Schwingers oder eines Schwingers, welcher pneumatisch zu Schwingungen angeregt wird.

Die Düse steckt vorzugsweise auswechselbar in einer Halterung des Handgerätes, so daß sie nach jedem Arbeitsgang ausgetauscht werden kann. Die Schallquelle ist dann schwingungsübertragend an die Halterung für die Düse angekoppelt und überträgt die Schwingungen auf die Halterung, von der Halterung auf die Düse und von der Düse auf die Füllmasse. Als Düse eignen sich kurze, enge Röhrchen, welche nach dem Arbeitsgang aus hygienischen Gründen entsorgt werden, so daß sie nicht vom allmählich aushärtenden Kunststoff befreit werden müssen.

Die Erfindung eignet sich für alle Füllmassen auf Kunstharzbasis, deren Viskosität durch genügend hochfrequente Schalleinwirkung, insbesondere durch Ultraschalleinwirkung vorübergehend herabgesetzt werden kann. Ein solches Verhalten findet man bei Dispersionen - um eine solche handelt es sich bei einer mit einem anorganischen Füllstoff gefüllten Kunstharzmasse - welche thixotropes Verhalten zeigen. Ein Beispiel ist die von der Vivadent Ets. in FL 9494 Schaan (Liechtenstein) hergestellte und unter dem Handelsnamen Tetric vertriebene Füllmasse, weiche als Monomer eine Mischung von UDMA ([2,2 (4), 4-Trimethylhexamethylen-bis-(2-carbamoyloxyethyl)] dimethacrylat), Bis-GMA (isopropyliden-bis [2 (3)-hydroxy-3(2)-(4-phenoxy)propyl]-bis(methacrylat) und TEGDMA (Triethylenglycoldimethacrylat) sowie 62 Vol.-% anorganische Füllstoffe mit einer Partikelgröße zwischen 0,04 µm und 3 µm enthält. Als Füllstoff ist eine Mischung von silanisiertem Siliziumdioxid, silanisiertem Bariumglasfüller und Ytterbium (III)-fluorid vorgesehen. Außer solchen Kompositen kommen auch Glasionomerzemente, Kompomere und Ormocere infrage.

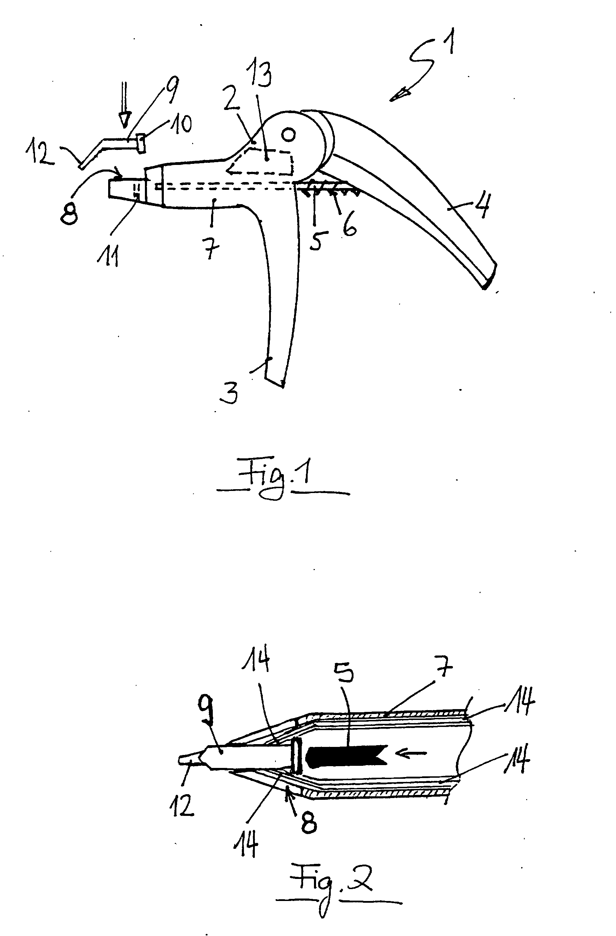

Ein Ausführungsbeispiel der Erfindung ist schematisch in der beigefügten Zeichnung dargestellt,in welcher
- Figur 1: einen Applikator in einer Seitenansicht und
- Figur 2: als Detail eine teilweise geschnittene Draufsicht auf das Vorderteil des Applikators zeigt.

Die Zeichnung zeigt einen Applikator 1 mit einem Aufnahmeteil 2, mit einem Handgriff 3 und mit einem schwenkbar am Aufnahmeteil 2 angebrachten Hebel 4, welcher auf einen Vorschubstempel 5 wirkt, welcher von einer Rückstellfeder 6 umgeben ist, welche zwischen dem Aufnahmeteil 2 und dem Hebel 4 eingespannt ist und den Hebel 4 nach seiner Betätigung in seine Ausgangsstellung zurückstellt.

Das Aufnahmeteil 2 hat ein spitz zulaufendes Rohrstück 7, an dessen Mantel an der Spitze ein Ausschnitt 8 vorgesehen ist, so daß eine Kartusche 9 von der Seite her in den Ausschnitt 8 eingesetzt werden kann. Die Kartusche 9 hat einen Flansch 10, welcher an einem Anschlag 11 im Rohrstück 7 anschlägt.

Die Kartusche 9 enthält eine Zahnfüllmasse, welche durch eine abgewinkelt angeordnete Düse 12 herausgedrückt werden kann. Dazu wirkt der Vorschubstempel 5 auf das hintere Ende der Kartusche 9 ein, wenn der Zahnarzt mit der Hand den Hebel 4 gegen den Handgriff 3 drückt.

Im hinteren Bereich des Aufnahmeteils 2 ist ein Ultraschallschwinger 13 angeordnet, welcher insbesondere piezoelektrisch arbeitet. Dieser Ultraschallschwinger 13 ist durch Lamellen 14, welche im Rohrstück 7 längs verlaufen, mit der Kartusche 9 verbunden. Ein elektrischer Schalter, welcher den Ultraschallschwinger 13 ein- und ausschaltet, ist mit dem Hebel 4 gekoppelt, so daß der Ultraschallschwinger 13 beim Betätigen des Hebels 4 eingeschaltet und beim Zurückschieben des Hebels 4 in seine Endstellung wieder ausgeschaltet wird.

## Patentansprüche

1. Handgerät zum Einfüllen einer Zahnfüllmasse auf Kunstharzbasis aus einem Vorratsbehälter (9) in eine Kavität eines Zahnes mit einer Düse (12), aus welcher die Füllmasse austritt,
mit Mitteln (4, 5, 6), welche die Füllmasse aus dem Vorratsbehälter (9) zur Düse (12) fördern,
und mit einem Griffteil (3),
**dadurch gekennzeichnet, daß** das Handgerät eine Schallquelle, insbesondere eine Ultraschallquelle (13) enthält, welche die Düse (12) in Schwingungen versetzt.

2. Handgerät nach Anspruch 1, **dadurch gekennzeichnet, daß** die Düse (12) ein auswechselbares Röhrchen ist, welches in einer Halterung des Handgerätes steckt.

3. Handgerät nach Anspruch 1 oder 2, **dadurch gekennzeichnet, daß** der Vorratsbehälter (9) auswechselbar in einer Halterung (2) steckt und die Schallquelle (13) schwingungsübertragend an die Halterung (2) angekoppelt ist.

4. Handgerät nach einem der Ansprüche 1 bis 3, **dadurch gekennzeichnet, daß** die Schallquelle (13) einen Piezo - Schwinger enthält.

5. Handgerät nach einem der Ansprüche 1 bis 3, **dadurch gekennzeichnet, daß** die Schallquelle (13) einen magnetostriktiven Schwinger enthält.

6. Handgerät nach einem der Ansprüche 1 bis 3, **dadurch gekennzeichnet, daß** die Schallquelle einen pneumatisch angeregten Schwinger enthält.

7. Handgerät nach einem der Ansprüche 1 bis 6, **dadurch gekennzeichnet, daß** ein gemeinsames Betätigungsteil (4) für die Schallquelle (13) und für die Fördermittel (4, 5, 6) vorgesehen ist.

8. Handgerät nach einem der Ansprüche 1 bis 7, **dadurch gekennzeichnet, daß** es nach Art einer Spritzpistole ausgebildet ist.

9. Handgerät nach einem der Ansprüche 1 bis 7, **dadurch gekennzeichnet, daß** es nach Art eines zahnärztlichen Handstückes ausgebildet ist.

10. Handgerät nach Anspruch 8 oder 9, **dadurch gekennzeichnet, daß** es einen Hebel oder einen Druckknopf als Betätigungsteil (4) hat.

## Revendications

1. Matériel à main pour le remplissage de la cavité d'une dent avec une matière de remplissage dentaire à base de résine synthétique, à partir d'un récipient de réserve (9), à l'aide d'une buse (12) par laquelle s'évacue la matière de remplissage,
comprenant des moyens (4, 5, 6) qui transportent la matière de remplissage depuis le récipient de réserve (9) jusqu'à buse (12),
et comprenant une partie (3) faisant office de poignée,
**caractérisé en ce que** le matériel à main contient une source sonore, en particulier une source d'ultrasons (13) qui imprime des oscillations à la buse (12).

2. Matériel à main selon la revendication 1, **caractérisé en ce que** la buse (12) est un petit tube remplaçable, qui vient s'enficher dans un support de matériel à main.

3. Matériel à main selon la revendication 1 ou 2, **caractérisé en ce que** le récipient de réserve (9) vient s'enficher de manière amovible dans un support (2) et la source sonore (13) est accouplée au support de manière à transmettre des oscillations.

4. Matériel à main selon l'une quelconque des revendications 1 à 3, **caractérisé en ce que** la source sonore (13) est un piézo-oscillateur.

5. Matériel à main selon l'une quelconque des revendications 1 à 3, **caractérisé en ce que** la source sonore (13) est un oscillateur magnétostrictif.

6. Matériel à main selon l'une quelconque des revendications 1 à 3, **caractérisé en ce que** la source sonore (13) est un oscillateur excité par voie pneumatique.

7. Matériel à main selon l'une quelconque des revendications 1 à 6, **caractérisé en ce qu'**on prévoit un élément de commande commun (4) pour la source sonore (13) et pour les moyens de transport (4, 5, 6).

8. Matériel à main selon l'une quelconque des revendications 1 à 7, **caractérisé en ce qu'**il est réalisé à la manière d'un pistolet de pulvérisation.

9. Matériel à main selon l'une quelconque des revendications 1 à 7, **caractérisé en ce qu'**il est réalisé à la manière d'une pièce à main du type utilisé par un dentiste.

10. Matériel à main selon la revendication 8 ou 9, **caractérisé en ce qu'**il possède un levier ou un bouton-poussoir à titre de d'élément de commande (4).

## Claims

1. Hand-held device for filling a filling compound on the basis of a synthetic resin from a supply container (9) into a cavity of a tooth using a nozzle (12) from which the filling compound is discharged,
having means (4, 5, 6) for conveying the filling compound from the supply container (9) to the nozzle (12),
and having a handle portion (3),
**characterised in that** the hand-held device comprises a source of sound, especially a source (13) of ultrasound, that sets the nozzle (12) into oscillation.

2. The hand-held device as defined in Claim 1, **characterised in that** the nozzle (12) is a small replaceable tube, which is inserted into a holder of the hand-held device.

3. The hand-held device as defined in Claim 1 or Claim 2, **characterised in that** the supply container (9) sits exchangeably in a holder (2) and that the source (13) of sound is coupled to the holder (2) in oscillation-transmitting fashion.

4. The hand-held device as defined in any of Claims 1 to 3, **characterised in that** the source (13) of sound comprises a piezoelectric oscillator.

5. The hand-held device as defined in any of Claims 1 to 3, **characterised in that** the source (13) of sound comprises a magnetostrictive oscillator.

6. The hand-held device as defined in any of Claims 1 to 3, **characterised in that** the source of sound comprises a pneumatically excited oscillator.

7. The hand-held device as defined in any of Claims 1 to 6, **characterised in that** a common actuating element (4) is provided for the source (13) of sound and for the conveying means (4, 5, 6).

8. The hand-held device as defined in any of Claims 1 to 7, **characterised in that** it is configured like a spray gun.

9. The hand-held device as defined in any of Claims 1 to 7, **characterised in that** it is configured like a dentist's handpiece.

10. The hand-held device as defined in Claim 8 or Claim 9, **characterised in that** it comprises a lever or a push button as an actuating element (4).
